Europäisches Patentamt

European Patent Office

Office européen des brevets

(11) Numéro de publication: **0 105 532**
**B1**

(12) **FASCICULE DE BREVET EUROPEEN**

(45) Date de publication du fascicule du brevet: **20.11.86**

(21) Numéro de dépôt: **83200084.8**

(22) Date de dépôt: **20.01.83**

(51) Int. Cl.⁴: **A 01 G 9/08**, B 65 G 59/06

(54) **Installation destinée à délivrer un à un des pots de fleurs à une machine destinée à remplir ceux-ci.**

(30) Priorité: **09.09.82 BE 208977**

(43) Date de publication de la demande:
**18.04.84 Bulletin 84/16**

(45) Mention de la délivrance du brevet:
**20.11.86 Bulletin 86/47**

(84) Etats contractants désignés:
**DE FR GB NL**

(56) Documents cités:
**CH-A- 580 022**
**DE-A-2 037 408**
**FR-A-2 038 100**

(73) Titulaire: **Constructiewerkhuizen Demaitere P.V.B.A.**
**Roeselaarsestraat, 171**
**B-8690 Moorslede (BE)**

(72) Inventeur: **Demaitere, Walter**
**Roeselaarsestraat, 171**
**B-8690 Moorslede (BE)**

(74) Mandataire: **Pieraerts, Jacques et al**
**Bureau Gevers S.A. rue de Livourne 7, Bte. 1**
**B-1050 Bruxelles (BE)**

Courier Press, Leamington Spa, England.

## Description

L'invention concerne une installation destinée à délivrer un à un des pots de fleurs à une machine destinée à les remplir avec de la terre de culture, ladite installation étant équipée notamment de réceptacles, qui viennent se placer successivement sous une pile verticale de pots vides emboîtés les uns dans les autres, et comportant en outre, un guidage vertical et une tige verticale entre lesquels est maintenue la pile de pots précitée, avec en sus un dispositif de retenue et d'éjection du pot situé à la base de la pile de pots précitée.

Une installation équipée de machines de l'espèce présente l'inconvénient que lors de la séparation du pot de fleurs inférieur d'une pile verticale, celui-ci ne tombe pas nécessairement verticalement, jusqu'à ce qu'il soit recueilli par un des réceptacles. Le pot de fleurs peut, en effet, lorsqu'il se détache de la pile, basculer légèrement de telle sorte qu'il ne parvient pas normalement ou pas nécessairement dans le réceptacle qui lui est destiné. Le terme "pot de fleurs" couvre des récipients de n'importe quelle section, que celle-ci soit circulaire ou rectangulaire (carrée). De même, les matériaux dans lesquels sont constitués les pots ne jouent aucun rôle mais, l'usage toujours plus répandu des pots de fleurs légers en matière plastique, accroît le risque qu'ils ne tombent pas en ligne droite ou verticalement, et ne parviennent donc pas dans le réceptacle correspondant.

Une installation présentant les invonvénients et dangers qui viennent d'être décrits, est représentée dans la demande allemande 2 037 408. A la lecture de ce document, on remarque que les pots de fleurs tombent en chute libre et que leur réception correcte sur un dispositif de réception ou une bande convoyeuse n'est pas assurée, en particulier lorsque les pots de fleurs sont faits de matière plastique et sont d'un poids plus léger comme cela se présente fréquemment à l'heure actuelle.

L'invention a pour but de remédier à ce défaut des installation connues et de procurer une installation qui garantit que chaque pot de fleurs parvient correctement dans le réceptacle prévu à cet effet dans la machine.

A cet effet, dans l'installation selon l'invention, la tige vertical précitée, le guidage ainsi que le dispositif de retenue et d'éjection précité, formé par les doigts, sont solidarisés d'un coulisseau qui peut être animé d'un mouvement ascendant-descendant le long d'une tige qui est un élément fixe de l'installation pour déplacer vers le bas le pot inférieur de la pile jusqu'au moment aù ledit pot atteint un niveau tel qu'il se trouve exactement au-dessus du réceptacle, ou dans celui-ci, et, ensuite, remonter le restant de la pile.

Selon une forme de réalisation remarquable, les doigts précités formant le dispositif de retenue et d'éjection précité, sont montés à pivotement par rapport à un boîtier solidaire du coulisseau précité, le doigt situé le plus bas pouvant osciller vers l'avant et vers l'arrière autour d'un axe de pivotement fixé sur le boîtier précité pour, dans une première position, retenir le pot de fleurs inférieur de la pile et pour, dans une second position, éjecter celui-ci, ledit mouvement vers l'avant étant produit sous l'action d'un ressort de traction tandis que le mouvement vers l'arrière est provoqué par le mouvement descendant d'une tige qui porte à sa partie inférieure le doigt qui rejette et repousse vers le bas le pot inférieur de la pile, la tige étant repoussée périodiquement vers le bas à l'encontre d'un ressort de traction par un levier à mouvement ascendant-descendant dont une extrémité est montée à charnière sur ledit boîtier et dont l'autre extrémité est reliée par un organe tel qu'un câble qui déplace le levier dans un sens, tandis qu'un ressort de traction rappelle ce levier en position de repos.

D'autres détails et avantages de l'invention ressortiront de la description qui sera donnée ci-après d'une installation selon l'invention, destinée à délivrer un à un des pots de fleurs. Cette description n'est donnée qu'à titre d'exemple et ne limite pas l'invention. Les notations de référence se rapportent aux figures annexées.

La figure 1 est une vue latérale schématique de l'installation selon l'invention, en position abaissée.

La figure 2 est également une vue latérale schématique de l'installation dans la position relevée.

La figure 3 représente à une échelle plus grande un détail de l'installation montrant la position dans laquelle est retenu le pot de fleurs inférieur de la pile.

La figure 4 est, également à une échelle plus grande, la représentation d'un détail de l'installation montrant la position dans laquelle le pot de fleurs inférieur d'une pile est libéré tandis que la pile elle-même est soutenue.

L'installation selon l'invention est essentiellement conçue pour déplacer à la verticale, vers le bas, une pile de pots de fleurs emboîtés les uns dans les autres jusqu'à ce que le pot de fleurs inférieur ou, éventuellement les pots de fleurs inférieurs ont atteint un niveau pour lequel, lors du rejet du pot de fleurs le plus bas celui-ci parvient indiscutablement dans le réceptacle de la machine prévu à cet effet, après quoi toute la pile de pots de fleurs ainsi que les éléments dans lesquels ceux-ci sont guidés, sont ramenés vers le haut.

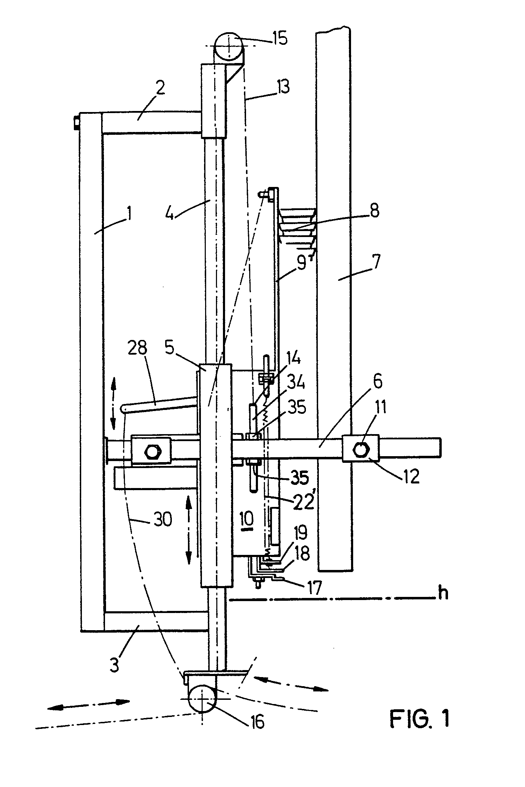

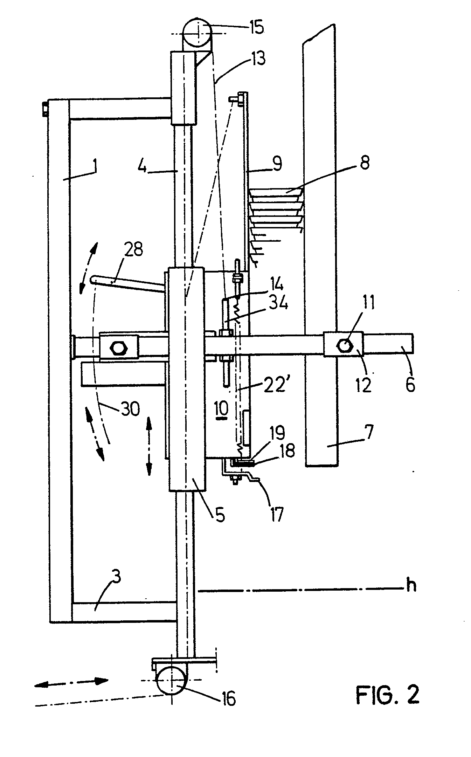

En se référant, un premier lieu, aux figures 1 et 2, on remarquera que l'installation comporte des éléments fixes et des éléments mobiles.

Les éléments fixes sont constitués par une structure de châssis 1, comportant deux bras latéraux 2 et 3 auxquels est reliée une tige 4. La structure formée par les éléments 1, 2 et 3 est reliée de manière fixe aux éléments non représentés de la machine. Des éléments qui peuvent être déplacés par rapport à la tige 4 sont constitués, en premier lieu, par un coulisseau 5. Ce coulisseau 5 peut donc être déplacé, selon un mouvement vers le haut et vers le bas, le long de la tige 4. Des éléments structuraux, tels qu'une petite poutrelle horizontale 6, à laquelle est relié le guidage vertical 7, sont encore reliés au coulisseau 5.

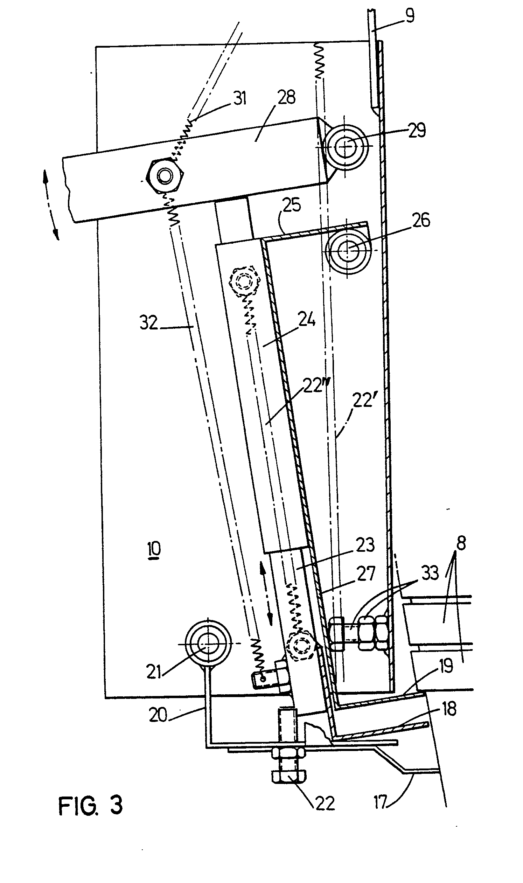

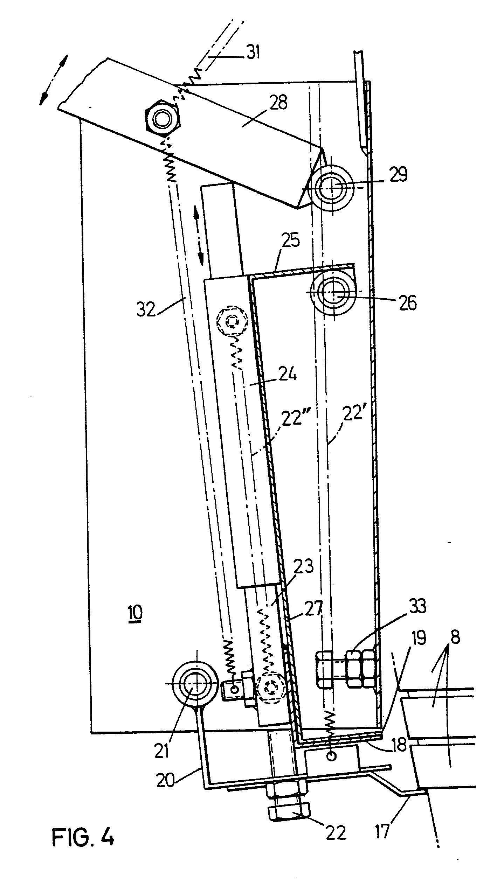

Une pile de pots de fleurs est représentée par la référence 8. Ces pots de fleurs se trouvent entre le guidage 7 et une tige 9 qui s'étend verticalement entre la tige 4 et le guidage 7. La plaque 9 est fixée sur le boîtier 10, dans lequel se trouve une série d'éléments essentiels de l'installation qui seront décrits plus tard, en rapport avec les figures 3 et 4. Le guidage 7 peut présenter une section angulaire, de telle sorte que des pots de fleurs ronds s'adaptent parfaitement à cette forme. D'autres sections sont évidemment également possibles, principalement lorsqu'on fait usage de pots de fleurs carrés ou rectangulaires.

Le guidage 7 se règle à l'aide d'une vis de réglage 11 qui traverse un élément déplaçable 12, fixé au guidage 7.

Le déplacement vers le haut et vers le bas du coulisseau (tuyau 5) et du boîtier 10 relié à celui-ci s'effectue, par exemple, en faisant usage d'une chaîne 13 qui est reliée en 14 à un tourillon 34 réglable en hauteur.

La chaîne 13 passe sur une roue dentée 15 et est ensuite conduite dans la tige creuse 4 pour être guidée sur une seconde roue dentée 16 au bas de la tige 4. Le déplacement, selon un mouvement de va-et-vient de la chaîne 13 est effectué de toute manière appropriée. Une forme d'exécution possible est constituée par exemple par un mécanisme excentrique qui relève périodiquement la chaîne. Le mouvement vers le bas du coulisseau 5 et des éléments qui lui sont reliés se produit tout simplement sous l'effet de la pesanteur, c'est-à-dire grâce au poids de l'ensemble.

Afin d'illustrer clairement le fonctionnement de l'installation il sera fait référence plus particulièrement aux figures 3 et 4.

Les figures représentent des détails qui se rapportent aux mêmes éléments mais qui sont représentés dans deux positions différentes.

Trois doigts qui coopèrent entre eux et avec les pots empilés 8 font saillie, à la partie inférieure, hors de ce boîtier. Il s'agit des doigts 17, 18 et 19.

Le doigt 17 est monté de manière réglable sur une équerre 20 qui, elle-même, pivote en 21 par rapport au boîtier 10. Le doigt 17 peut être installé grâce à la vis de réglage 22, de manière plus ou moins avancée par rapport au boîtier et cela pour tenir compte des dimensions des pots empilés. Un ressort de traction 22' ramène le doigt 17 dans sa position de repos (figures 1 et 2).

Le doigt 18 est monté dans la partie inférieure, sur l'extrémité d'une tige 23 qui est guidée au-travers du coulisseau 24, lequel tuyau est fixé sur un bras 25 qui forme avec celui-ci un angle droit et pivote autour de 26. Le bras 27 est relié au coulisseau 24 et ce bras 27 est replié sur 90° à sa partie inférieure pour former le doigt 19. Un levier 28 qui est monté à charnière en 29 sur le boîtier 10 peut être abaissé par un câble 30, tandis qu'un ressort de traction 31 ramène ce levier vers sa position de repos. Un ressort de traction 32 applique en permanence la tige 23 contre le levier 28. Enfin, la vis de réglage 33 assure la limitation nécessaire imposée à l'oscillation du coulisseau 24 et du bras 27, c'est-à-dire aux doigts 18 et 19. En se référant encore aux figures 1 et 2, on remarquera que la longueur de la chaîne 13 peut être adaptée grâce au réglage, à l'aide de deux contre-écrous 35, d'un tourillon 34 muni d'un pas de vis. L'extrémité de la chaîne 13 est en effet fixée à l'extrémité de ce tourillon 34.

Avant de décrire le fonctionnement des doigts 17, 18 et 19, il y a lieu de supposer qu'aussi bien la chaîne 13 que le câble 30 est commandée périodiquement, de telle sorte qu'un fonctionnement synchronisé des doigts 17, 18 et 19 et des réceptacles de la machine est réalisé. Les réceptacles de la machine peuvent se trouver sur une table rotative, mais on peut également concevoir un mouvement rectiligne de ces réceptacles. Les réceptacles peuvent être formés par des bras en forme de cratère ou constitués tout simplement en plaques perforées et calibrées. Les pots 8 forment une pile telle que représentée aux figures et cela de telle sorte que lorsque le doigt 17 se trouve dans la position représentée aux figures 2 et 3, ce doigt supporte latéralement le pot de fleurs inférieur. Ce pot inférieur ne tombera pas seulement dans le réceptacle prévu à cet effet, grâce à son poids, mais sera détaché de la pile par l'action du doigt 18. Ce doigt 18 descend tout en étant déplacé légèrement latéralement vers l'avant, sous l'influence du mouvement descendant du levier 28. Simultanément, le doigt 18 repousse le doigt 17 vers le bas et, attendu que ce doigt a un point de rotation en 21, également selon un arc de cercle vers l'arrière par rapport aux pots empilés. Au cours de ce mouvement des doigts 18 et 17, le pot qui fait immédiatement suite dans la série des pots empilés est mis en contact avec le doigt 19. Lors du mouvement ascendant du levier 28 les doigts 17; 18 et 19 reviennent, sous l'influence des ressorts de traction 32, 22' et 22'', dans la position représentée aux figures 2 et 3.

Les mouvements des doigts 17, 18 et 19 se produisent en synchronisme avec le mouvement vers le bas des pots empilés 8. Les pots empilés 8 sont amenés vers le bas en même temps que les doigts déjà cités, le guidage 7 et la tige 9 grâce à la synchronisation des mouvements ascendants et descendants du coulisseau 5 le long de la tige 9, laquelle, ainsi qu'il a déjà été exposé, est montée fixe par rapport à l'installation de la machine.

Cette description fait clairement apparaître la caractéristique essentielle de l'invention qui est de faire descendre à la verticale les pots de fleurs empilés, en même temps que l'installation qui délivre un à un les pots de fleurs à des réceptacles prévus à cet effet.

La hauteur à laquelle se trouvent les réceptacles est représentée schématiquement par la ligne "h".

Ceci signifie que lorsque le doigt 17 se trouve dans la position avancée (figures 1 et 3) le pot inférieur éjecté se trouve déjà dans le receptacle.

L'invention se caractérise donc d'une part par la descente de toute une pile de pots et la mise en fonctionnement des doigts 18 et 19 qui assurent l'éjection du pot de fleurs inférieur, et le soutien du pot immédiatement supérieur dans la pile.

Cette installation garantit donc un positionnement correct des pots ainsi que de toute la pile, au-dessus du réceptacle dans lequel ces pots doivent parvenir un à un.

Il est entendu que l'invention n'est pas limitée à la forme d'exécution décrite ci-dessus et que bien des modifications pourraient y être apportées sans s'écarter de l'idée fondamentale de l'invention telle qu'elle ressort de la revendication 1. Cette remarque concerne tout particulièrement la structure des doigts mêmes et la manière dont les éléments de l'installation peuvent être commandés.

## Revendications

1. Installation destinée à délivrer un à un des pots de fleurs à une machine destinée à les remplir avec de la terre de culture, ladite installation étant equipée notamment de réceptacles, qui viennent se placer successivement sous une pile verticale de pots vides emboîtés les uns dans les autres, et comportant en outre, un guidage vertical et une tige verticale entre lesquels est maintenue la pile de pots précitée, avec en sus, un dispositif de retenue et d'éjection du pot situé à la base de la pile de pots précitée, caractérisée en ce que la tige verticale précitée (9), le guidage (7) ainsi que le dispositif de retenue et d'éjection précité, formé par des doigts (17), (18) et (19), sont solidarisés d'un coulisseau (5) qui peut être animé d'un mouvement ascendent-descendant le long d'une tige (4) qui est un élément fixe de l'installation pour déplacer vers le bas le pot inférieur de la pile jusqu'au moment où ledit pot atteint un niveau tel qu'il se trouve exactement au-dessus du réceptacle, au dans celui-ci, et, ensuite, remonter le restant de la pile.

2. Installation selon la revendication 1, caractérisée en ce que le coulisseau précité (5) est soulevé par une chaîne (13) ou un organe analogue, l'opération de levée étant commandée par un excentrique ou un dispositif semblable qui provoque le déplacement périodique de la chaîne précitée (13) et de la tige (9) qui lui est solidaire se faisant sous l'action de la pesanteur.

3. Installation selon la revendication 1, caractérisée en ce que les doigts précités (17), (18) et (19) formant le dispositif de retenue et d'éjection précité, sont montés à pivotement par rapport à un boîtier (10) solidaire du coulisseau précité (5), le doigt (17) situé le plus bas pouvant osciller vers ou en sens opposé à la pile précitée autour d'un axe de pivotement (21) fixé sur le boîtier précité (10) pour, dans une première position, retenir le pot de fleurs inférieur de la pile et pour, dans une seconde position, éjecter celui-ci, ledit mouvement vers la pile depots etant produit sous l'action d'un ressort de traction (22') tandis que le mouvement inverse est provoqué par le mouvement descendant d'une tige (23) qui porte à sa partie inférieure le doigt (18) qui rejette et repousse vers le bas le pot inférieur de la pile, la tige (23) étant repoussée périodiquement vers le bas à l'encontre d'un ressort de traction (22'') par un levier (28) à mouvement ascendant-descendant dont une extrémité est montée à charnière en (29) sur ledit boîtier (10) et dont l'autre extrémité est reliée par un organe tel qu'un câble (30) qui déplace le levier dans un sens, tandis qu'un ressort de traction (31) rapelle ce levier (28) en position de repos.

4. Installation selon la revendication 3, caractérisée en ce que le troisième doigt (19), qui exécute un mouvement oscillant de va-et-vient pour retenir temporairement le pot de la pile qui se trouve immédiatement au-dessus du pot inférieur à éjecter, fait partie du bras (27), lui-même monté sur un coulisseau (24) qui peut être déplacé lelong de la tige précitée (23).

5. Installation selon la revendication 4, caractérisée en ce que le coulisseau (24) est monté à charnière par un bras (25) sur le boîtier précité (10) et en ce qu'une vis de réglage (33) est prévue, qui limite la course dudit doigt (19).

6. Installation selon l'une quelconque des revendications 1 à 5, caractérisé en ce que la synchronisation entre les mouvements oscillants des doigts précités (17), (18) et (19) et le mouvement ascendant-descendant du coulisseau (5) déplaçant les pots de fleurs vers le bas et vers le haut est conçue de telle sorte que les doigts se trouvent, à l'exception du doigt inférieur (18), en position rétractée lorsque les pots sont déplacés vers le haut et ramenés à nouveau vers le bas, jusqu'à ce qu'ait lieu l'éjection du pot inférieur, le doigt inférieur (18) étant alors en position rétractée.

## Patentansprüche

1. Einrichtung zur Abgabe von Blumentöpfen, die nacheinander einer Maschine zugeführt werden, in der sie mit Blumenerde befüllt werden, mit Aufnahmen, die nacheinander unter einen vertikalen Stapel aus den ineinandergesetzten, leeren Blumentöpfen gebracht werden, ferner mit einer vertikalen Führung und mit einer vertikalen Stange, zwischen denen der Stapel gehalten wird, weiterhin mit einer Vorrichtung zum Halten und Auswerfen des jeweils untersten Blumentopfes des Stapels, dadurch gekennzeichnet, daß die vertikale Stange (9), die Führung (7) und die von Fingern (17, 18, 19) gebildete Vorrichtung zum Halten und Auswerfen mit einem Gleitstück (5) verbunden sind, das längs einer Stange (4) nach oben und unten verschiebbar ist, die ein festes Element der Einrichtung ist, so daß der unterste Blumentopf des Stapels nach unten verschoben wird, bis dieser Blumentopf ein Niveau erreicht hat derart, daß er sich genau über oder in der Aufnahme befindet, worauf der Rest des Stapels angehoben wird.

2. Einrichtung nach Anspruch 1, dadurch gekennzeichnet, daß das Gleitstück (5) von einer Kette (13) oder dergleichen angehoben wird, wobei die Anhebung von einem Excenter oder dergleichen gesteuert ist, der die periodische Verschiebung der Kette (13) und der Stange (9) bewirkt, die damit fest verbunden ist, und die durch das Gewicht erfolgt.

3. Einrichtung nach Anspruch 1, dadurch gekennzeichnet, daß die Finger (17, 18, 19) an einem Gehäuse (10) schwenkbar gelagert sind, das fest mit dem Gleitstück (5) verbunden ist, wobei der unterste Finger (17) um eine am Gehäuse (10) ausgebildete Schwenkachse auf den Stapel zu oder von ihm hinweg schwingen kann, so daß der unterste Blumentopf des Stapels in einer ersten Lage gehalten wird und in einer zweiten Lage ausgeworfen wird, wobei die Bewegung zum Stapel unter der Einwirkung einer Zugfeder (22') erfolgt und die umgekehrte Bewegung von der abwärts gerichteten Bewegung einer Stange (23) verursacht wird, die an ihrem unteren Teil den Finger (18) trägt, der den untersten Topf auswirf und nach unten stößt, wobei die Stange (23) periodisch nach unten bewegt wird unter der Einwirkung einer Zugfeder (22'') über einen Hebel (28) mit nach oben und unten gerichteter Bewegung, dessen eines Ende über eine Gelenk (29) am Gehäuse (10) befestigt ist und dessen anderes Ende mit einem Organ, beispielsweise einem Kabel (30), verbunden ist, das den Hebel in einer Richtung verstellt, während eine Zugfeder (31) den Hebel (28) in die Ruhelage zurückholt.

4. Einrichtung nach Anspruch 3, dadurch gekennzeichnet, daß der dritte Finger (19), der eine hin und der gehende, schwingende Bewegung ausübt, um denjenigen Topf des Stapels, der sich direkt über dem unteren, auszuwerfenden Topf befindet, zeitweise zu halten, Teil des Armes (27) ist, der seinerseits an einem Gleitstück (24) befestigt ist, das längs der Stange (23) verschoben werden kann.

5. Einrichtung nach Anspruch 4, dadurch gekennzeichnet, daß das Gleitstück (24) über einen Arm (25) am Gehäuse (10) gelenkig befestigt ist und daß eine Stellschraube (33) vorgesehen ist, die den Weg des Fingers (19) begrenzt.

6. Einrichtung nach einem der Ansprüche 1 bis 5, dadurch gekennzeichnet, daß die Synchronisierung zwischen den Schwingbewegungen der Finger (17, 18, 19) und der auf und ab gerichteten Bewegung des Gleitstücks (5), dau die Töpfe nach unten und oben verschiebt, derart erfolgt, daß die Finger sich mit Ausnahme des untersten Fingers (18) in einer zurückgezogenen Position befinden, wenn die Töpfe nach oben verschoben sind und von neuem nach unten mitgenommen werden, bis der untere Topf ausgeworfen wird, wobei der untere Finger (18) sich dann in einer zurückgezogenen Position befindet.

**Claims**

1. Equipment for feeding flower pots one by one to a machine for filling same with cultivating mould, said equipment being notably fitted with receptacles which come to lie in sequence underneath a vertical pile of nested empty pots, and further comprising a vertical guideway and a vertical rod wherebetween said pot pile is retained, with moreover a pot retaining and ejecting device lying at the bottom from said pot pile, characterized in that said vertical rod (9), the guideway (7) as well as said retaining and ejecting device comprised of fingers (17), (18) and (19), are integral with a slide (5) which is movable with an up-and-down motion along a rod (4) which is a fixed equipment component, to move downwards the lowermost pot in the pile down to that moment where said pot reaches such a level that it lies accurately above the receptacle, or inside same, and to raise thereafter the pile remaining portion.

2. Equipment according to claim 1, characterized in that said slide (5) is raised by a chain (13) or similar component, the raising operation being controlled by an eccentric or similar device which causes the recurring displacement of said chain (13) and rod (9) integral therewith, occurring under gravity action.

3. Equipment according to claim 1, characterized in that said fingers (17), (18) and (19) comprising said retaining and ejecting device, are swingably mounted relative to a housing (10) integral with said slide (5), the lowermost finger (17) being swingable towards or in the opposite direction to said pile about a swing axis (21) secured to said housing (10) to retain in a first position, the lowermost flower pot from the pile, and to eject in a second position, said pot, said movement towards the pot pile being caused by the action of a pulling spring (22'), while the opposite movement is caused by the lowering motion of a rod (23) which bears at the bottom thereof, that finger (18) which repels and pushes downwards the lowermost pot in the pile, the rod (23) being pushed recurrently downwards against the action of a pulling spring (22''), by a lever (28) with an up-and-down motion, the one end of which is hingedly mounted in (29) on said housing (10) and the other end of which is connected through a member such as a cable (30) which moves the lever in one direction, while a pulling spring (31) biases said lever (28) to the rest position.

4. Equipment according to claim 3, characterized in that the third finger (19) which performs a swinging to-and-fro movement to retain temporarily that pile pot lying just above the lowermost pot to be ejected, is part of arm (27) which is in turn mounted on a slide (24) which is movable along said rod (23).

5. Equipment according to claim 4, characterized in that the slide (24) is hingedly mounted with an arm (25) on said housing (10), and in that an adjusting screw (33) is provided, which limits the travel of said finger (19).

6. Equipment according to any one of claims 1 to 5, characterized in that the synchronizing between the swinging movements of said fingers (17), (18) and (19), and the up-and-down movement of the slide (5) moving the flower pots down and up, is so designed that the fingers lie, to the exception of the lowermost finger (18), in a retracted position when the pots are being moved upwards and returned downwards, until the lowermost pot ejection does occur, the lowermost finger (18) then lying in retracted position.

FIG. 1

FIG. 2

FIG. 3

FIG. 4